Europäisches Patentamt

(19) European Patent Office

Office européen des brevets

(11) Publication number: **0 070 636**
**B1**

## (12) EUROPEAN PATENT SPECIFICATION

(45) Date of publication of patent specification: **16.04.86**

(51) Int. Cl.⁴: **B 60 H 3/06**

(21) Application number: **82303450.9**

(22) Date of filing: **01.07.82**

(54) Cab with heating and/or ventilating system.

(30) Priority: **16.07.81 GB 8121937**

(43) Date of publication of application:
**26.01.83 Bulletin 83/04**

(45) Publication of the grant of the patent:
**16.04.86 Bulletin 86/16**

(84) Designated Contracting States:
**DE FR IT SE**

(56) References cited:
**CH-A- 578 719**
**DE-U-7 244 048**
**FR-A-2 249 571**
**GB-A- 667 413**
**GB-A-1 114 149**
**US-A-2 537 278**
**US-A-2 655 091**
**US-A-4 120 527**
**US-A-4 140 047**

(73) Proprietor: **MASSEY-FERGUSON SERVICES N.V.**
**Abraham de Veerstraat 7A**
**Curaçao Netherlands Antilles (NL)**

(72) Inventor: **Ruspaggiari, Dino**
**Bagnolo in Piano Via Giovanni XXIII 15**
**Reggio Emilia (IT)**

(74) Representative: **Jones, David Bryn**
**Patent and Trade Marks Department Massey-Ferguson**
**Stareton, near Kenilworth Warwickshire CV8 2LJ (GB)**

Courier Press, Leamington Spa, England.

## Description

### Technical Disclosure

This invention relates to cabs for vehicles such as tractors which include a heating and/or ventilating system in which air is drawn into the cab from the atmosphere via a filter using a fan.

Various such cab arrangements are known, for example, the cab described in US—A—4140047 in which an air filter is inserted into an air intake passage via a door and is clamped in its operational position by an entirely separate and relatively complex filter securing device in the form of a toggle-operated support frame.

### Disclosure of the Invention

It is an object of the present invention to provide a cab having a heating and/or ventilating system with an improved and simplified filter installation.

Thus according to the present invention there is provided a cab for a tractor or similar vehicle, the cab having an intake through which air can be drawn into the cab from outside, a heating and/or ventilating unit which includes a fan for drawing air in and distributing the air to the interior of the cab, an air passage connecting the air intake and the heating and/or ventilating unit, a filter in the passage for filtering the air drawn in through the air intake on its way to the heating and/or ventilating unit, a filter access opening provided into the air passage for the insertion or removal of the filter, and a filter access hatch closing the access opening, characterised in that said cab further comprises a filter sealing surface bounding the passage for co-operating with the filter to ensure that the air passing through the passage passes through the filter, and filter wedge members carried on the inside of the access hatch and co-operating with fixed wedging surfaces disposed within the air passage so that when the access hatch is secured in position over the opening the wedge members force the filter against the sealing surface.

As will be appreciated the present invention provides a cab with a simple and relatively inexpensive filter securing arrangement in which the filter is automatically secured in position by the co-operation of the wedge members and wedging surfaces when the filter access hatch is secured in position over the access opening.

Preferably the filter access opening is in the roof of the cab. This provides easy access to the filter for routine cleaning and servicing, particularly when an escape hatch is provided in the roof adjacent the filter access hatch since the filter access hatch can then be reached by an operator standing in the cab with his head and shoulders poking through the escape hatch.

Preferably, the filter is secured against the sealing surface so that the outer face of the filter (that is the face through which air first passes on its journey to the heating and/or ventilating unit) has a downwardly facing inclination. Such an arrangement has the advantage that when the fan is not drawing air into the cab and a door of the cab is slammed, a reverse flow of air occurs through the filter, and any dust or other debris which has collected on the outer face of the filter tends to fall clear of the filter.

Preferably the air passage between the outer face of the filter and the intake is shaped so that the dust or debris which falls from the outer face of the filter tends to fall out of the intake under the action of gravity.

### Description of the Drawings

One embodiment of the present invention will now be described, by way of example only, with reference to the accompanying drawings in which:—

Figure 1 is a perspective view of the outside of the tractor cab embodying the present invention with part of an air filter installation in exploded detail;

Figure 2 is a vertical section through the air filter installation of Figure 1;

Figure 3 is a schematic diagram of the heating/ventilating system used in the cab of Figure 1.

Figures 4, 5 & 6 are plan, side and end views of the hatch which closes the filter access opening of Figure 1;

Figure 7 is a perspective view of the air filter and part of the filter clamping arrangement carried by the filter access hatch;

Figure 8 is a plan view of the part of the air ducting which supports the air filter, and

Figure 9 shows a typical access hatch fastener.

### Best Mode of Carrying Out Invention

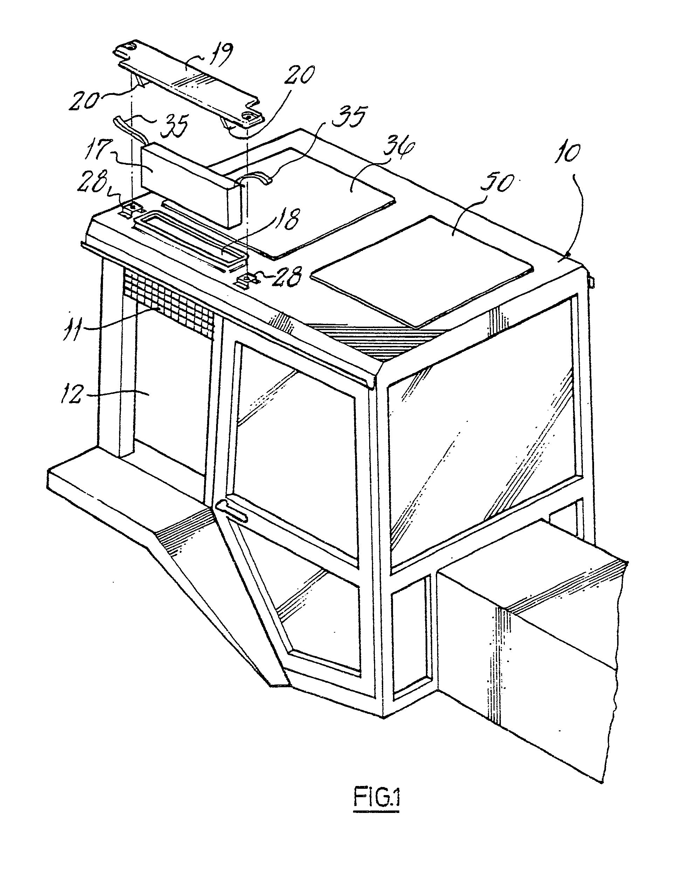

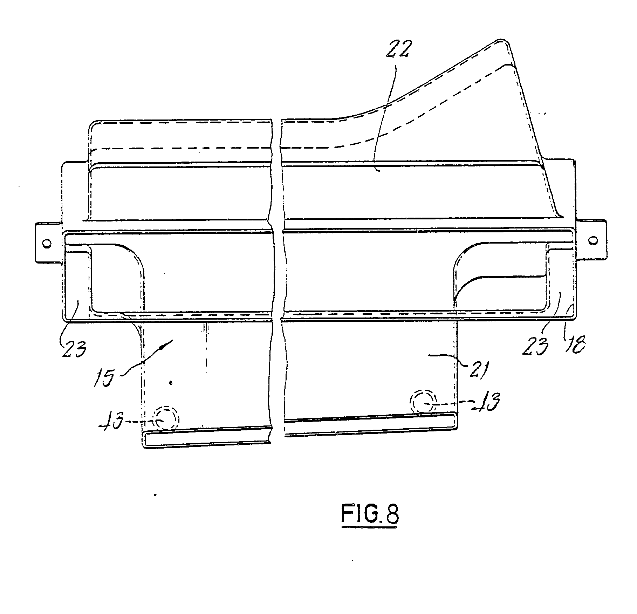

Figures 1, 2 & 3 show the general details of a tractor cab 10 provided with a heating and/or ventilating system which includes an air intake 11 over a rear cab side window 12. The intake is connected with a heating and/or ventilating unit 13 via an air passage provided the plastics ducting 14. Ducting 14 comprises a single piece plastics moulding 15, shown in detail in Figure 8, and an elbow bend 16 which interconnects the moulding 15 and unit 13.

As will be appreciated, air is drawn into the cab by a fan which forms part of the heating and/or ventilating unit 13 via intake 11. This air passes, as is shown by lines X, through the entry portion 21 of moulding 15, through filter 17, into the exit portion 22 of moulding 15 and hence via elbow bend 16 into the heating and/or ventilating unit 13 from whence the air is then blown into the cab via suitably positioned vents, etc.

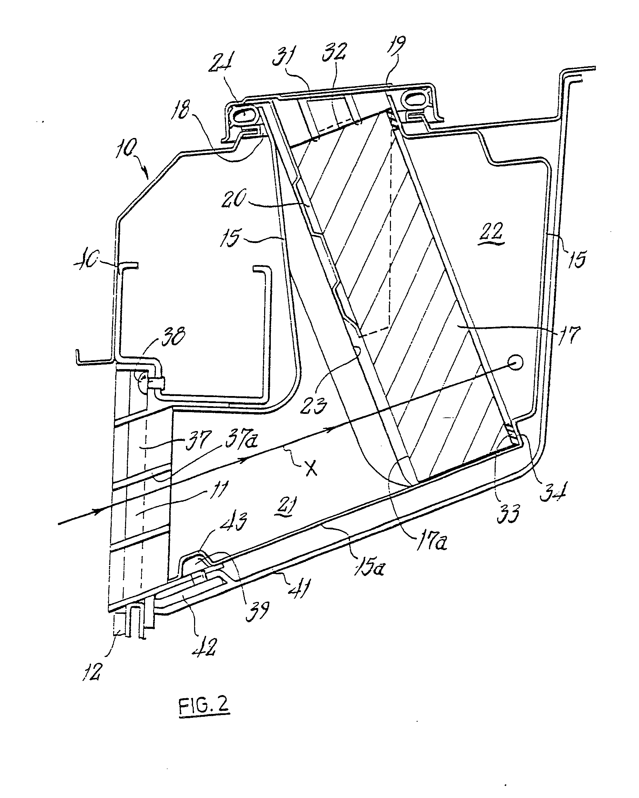

Turning to the details of the filter installation it will be seen that the filter-securing/wedging members 20 co-operate with inclined surfaces 23 of the moulding 15. Access opening 18 is provided with a seal 24 which co-operates with the underside of access hatch 19 to seal the access opening when the hatch 19 is secured in its operating position, shown in Figure 2, using the quarter-turn fastener arrangement 25 shown in detail in Figure 9. This fastener is of a bayonet type in which a cross pin 26 is free to pass through a slot 27 in a fastening plate 28 as the access hatch is lowered in the direction Y. Subsequent turning of the fastener through 90 degrees, as indicated by arrow Z, places the cross pin 26 under the raised indentations 29 of the fastening plate thus locking the access hatch in position. The cross pin 26 is upwardly biassed relative to the hatch 19 by spring loading 30 to ensure its continued engagement with the identations 29.

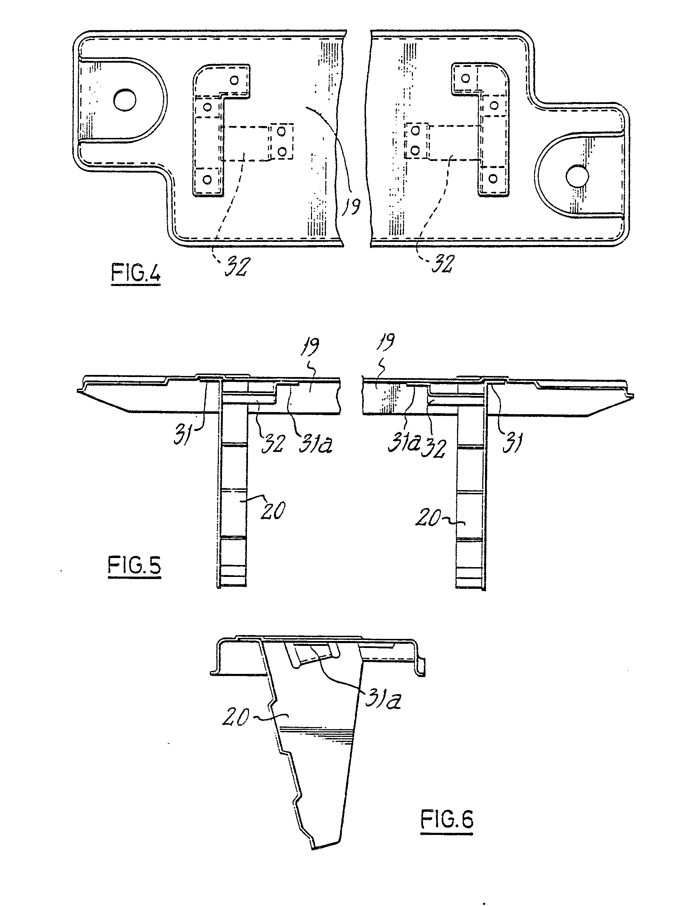

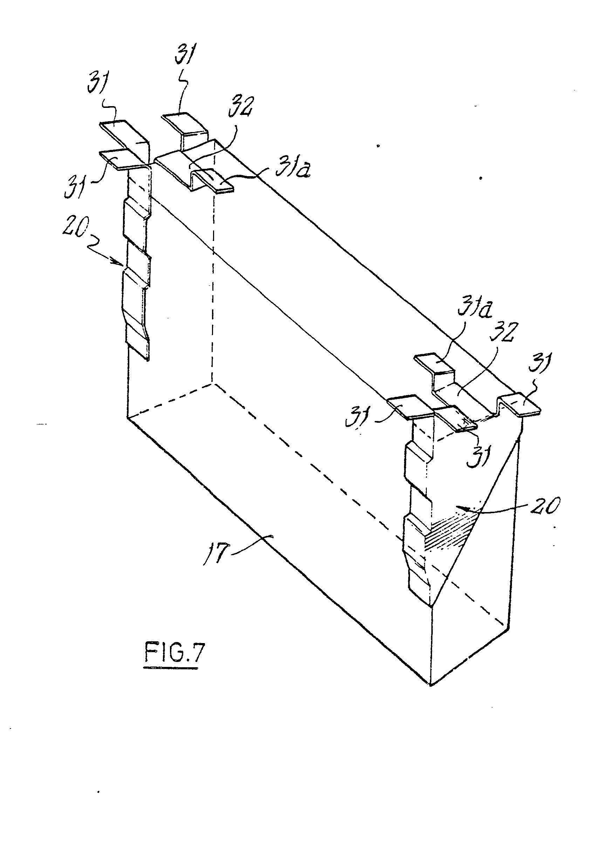

The detailed construction of the access hatch 19 and filter securing/wedging members 20 can be seen from Figures 4 to 7. Members 20 are provided with a series of tabs 31 which are spot-welded or otherwise secured to the underside of hatch 19. One of the tabs 31 is provided on the end of an arm 32, which bears against the upper surface of the filter as can be seen in Figures 2 and 7.

The filter 17 includes a peripheral sealing member 33 for sealing contact with a sealing surface 34 provided on moulding 15. When the filter 17 and hatch 19 are in their operating position, as shown in Figure 2, the wedging effect which occurs between members 20 and surfaces 23 forces the seal into contact with sealing surface 34 thus ensuring that all the air which is drawn in through intake 11 must pass through the filter 17 on its way to the exit portion 22 of moulding 15.

To assist the insertion and removal of filter 17 a pair of plastic or fibre tabs 35 are provided on the upper corners of the filter.

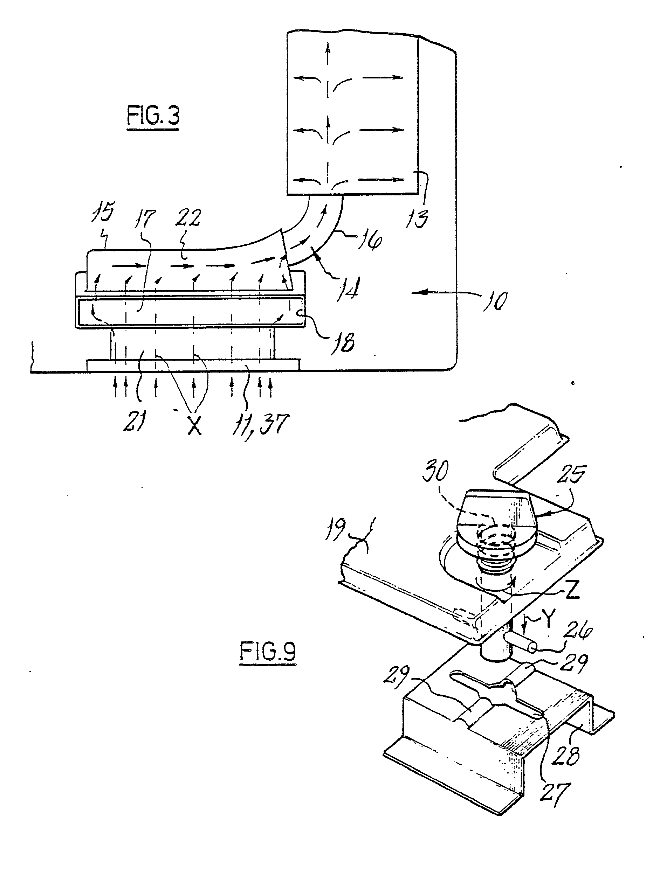

As can be seen from Figures 1 and 3, the roof of the cab 10 is provided with two further hatches, a first escape hatch 36 and a second heating/-ventilating unit access hatch 50 sighted vertically over the unit 13. Thus to insert or remove the filter 17 from hatch 18, the operator simply opens the escape hatch 36 and pokes his head and shoulders through this hatch to give him easy access to the adjacent hatch cover 19.

As can be seen from Figure 2, the filter 17 is inclined with its entry face 17a facing downwardly. The effect of this is that when the heating/ventilating unit is not operating and the cab door is slammed, a reversal of air flow will occur through the filter 17 thus blowing off any dust, etc., which has tended to collect on the entry surface 17a of the filter. By arranging the bottom portion 15a of the moulding 15 to slope downwardly towards the intake 11 any dust, etc. which falls from the filter surface 17a tends to fall out of the intake 11 under the action of gravity.

As can be seen from Figures 1 and 2, air intake 11 is provided with a grating 37 having a number of vertically and generally horizontally extending webs. The horizontally extending webs 37a are in fact inclined slightly upwardly in the direction of air intake in an attempt to promote a flow of air generally at right angles to the filter entry surface 17a.

As can be seen from Figure 2, the grating 37 is riveted in position at 38, 39. Rivets 38 secure the grating to a structure member 40 of the cab whilst rivets 39 interconnect the grating 37 with a plastics cab roof liner 41 which is itself hooked over a flange 42 which forms part of the cab structure. Figure 2 also shows the manner in which the grating 37 and the entry portion 21 of moulding 15 interfit with each other, and the raised portions 43 of moulding 15 which cover rivets 37 can be seen in Figures 2 and 8.

It will be seen that the present invention thus provides a cab for a tractor or a similar vehicle which has a heating and/or ventilating system which includes an air filter which can be readily installed or removed for replacement/cleaning. It will be appreciated that since the filter is removed to a location outside the cab any possibility of contaminating the cab by debris falling from the filter during its removal after long service is eliminated.

### Claims

1. A cab (10) for a tractor or similar vehicle, the cab having an intake (11) through which air can be drawn into the cab from outside, a heating and/or ventilating unit (13) which includes a fan for drawing air in and distributing the air to the interior of the cab, an air passage (14) connecting the air intake and the heating and/or ventilating unit, a filter (17) in the passage for filtering the air drawn in through the air intake on its way to the heating and/or ventilating unit, a filter access opening (18) provided into the air passage (14) for the insertion or removal of the filter, and a filter access hatch (19) closing the access opening, characterised in that said cab further comprises a filter sealing surface (34) bounding the passage for co-operating with the filter (17) to ensure that the air passing through the passage passes through the filter, and filter wedge members (20) carried on the inside of the access hatch (19) and co-operating with fixed wedging surfaces (23) disposed within the air passage (14) so that when the access hatch is secured in position over the opening (18) the wedge members force the filter against the sealing surface.

2. A cab (10) according to claim 1, characterised in that the filter (17) is secured against the sealing surface (34) so that the outer face (17a) of the filter through which air first passes on its journey to the heating and/or ventilating unit has a downwardly facing inclination.

3. A cab (10) according to Claims 2, characterised in that the air passage (15a) between the outer face (17a) of the filter and the intake (11) is shaped so that any dust or debris which falls from the outer face of the filter tends to fall out of the intake under the action of gravity.

4. A cab (10) according to any one of claims 1 to 3, characterised in that the filter access hatch (19) is held in its closed position over the access opening by bayonet-type quarter-turn fasteners (25).

5. A cab (10) according to any one of claims 1 to 4, characterised in that the filter access opening (18) is in the roof of the cab.

6. A cab (10) according to claim 5, characterised in that an escape hatch (36) is provided in the roof of the cab adjacent the filter access hatch (19) to enable an operator to reach the filter access hatch and remove the filter (17) by standing in the cab with his head and shoulders poking through the open escape hatch.

## Patentansprüche

1. Kabine für einen Traktor oder ein ähnliches Fahrzeug, welche einen Einlass (11), durch den Aussenluft in die Kabine gesaugt werden kann, ein Heiz- und/oder Lüftungsaggregat (13) mit einem Ventilator zum Ansaugen und Verteilen der Luft in die Kabine, einen den Lufteinlass und das Heiz- und/oder Lüftungsaggregat verbindenden Luftkanal (14), einen Filter (17) im Luftkanal zum Filtern der durch den Einlass angesaugten Luft auf ihrem Weg zum Heiz- und/oder Lüftungsaggregat, eine Filterzugangsöffnung (18) im Luftkanal (14) zum Einsetzen oder Entfernen des Filters, sowie einen die Filterzugangsöffnung verschliessenden Lukendeckel (19) aufweist, dadurch gekennzeichnet, dass eine den Luftkanal umgrenzende und mit dem Filter (17) zusammenwirkende Filterdichtfläche (34) vorgesehen ist, wodurch sichergestellt wird, dass die durch den Luftkanal fliessende Luft den Filter durchströmt, und dass an der Innenseite des Lukendeckels (19) angeordnete Filterkeile (20) mit fest im Luftkanal (14) angeordneten Keilflächen (23) derart zusammenarbeiten, dass bei Anbringen des Lukendeckels in seiner Stellung über der Öffnung (18) die Keile den Filter gegen die Dichtfläche drücken.

2. Kabine nach Anspruch 1, dadurch gekennzeichnet, dass der Filter (17) derart gegen die Dichtfläche (34) gedrückt wird, dass seine Stirnfläche (17a), welche zuerst von der Luft auf ihrem Weg zum Heiz- und/oder Lüftungsaggregat durchströmt wird, nach unten geneigt ist.

3. Kabine nach Anspruch 2, dadurch gekennzeichnet, dass der Luftkanal (15a) zwischen der Stirnfläche (17a) des Filters und dem Einlass (11) derart ausgebildet ist, dass von der Stirnfläche des Filters abfallender Staub oder Schmutz, durch Schwerkraft aus dem Einlass herausfällt.

4. Kabine nach einem der Ansprüche 1 bis 3, dadurch gekennzeichnet, dass der Lukendeckel (19) mittels eines mit Vierteldrehungen betätigten Bajonettverschlusses in seiner geschlossenen Stellung über der Filterzugangsöffnung gehalten wird.

5. Kabine nach einem der Ansprüche 1 bis 4, dadurch gekennzeichnet, dass die Filterzugangsöffnung (18) im Kabinendach angeordnet ist.

6. Kabine nach Anspruch 5, dadurch gekennzeichnet, dass neben dem Lukendeckel (19) im Kabinendach eine Ausstiegsluke (36) angeordnet ist, durch die der Bedienungsmann den Lukendeckel erreichen und den Filter entfernen kann, wenn er in der Kabine steht und Kopf und Schultern durch die offene Ausstiegsluke streckt.

## Revendications

1. Cabine (10) pour tracteur ou véhicule analogue, la cabine comportant une prise d'air (11) par laquelle l'air extérieur peut être aspiré dans la cabine, un dispositif de chauffage et/ou de ventilation (13) qui comprend un ventilateur pour aspirer l'air et l'envoyer à l'intérieur de la cabine, un passage pour l'air (14) reliant la prise d'air et le dispositif de chauffage et/ou de ventilation, un filtre (17) monté dans le passage pour filtrer l'air aspiré par la prise d'air sur son chemin vers le dispositif de chauffage et/ou ventilation, une ouverture d'accès au filtre (18) ménagée dans le passage pour l'air (14) pour la pose ou le retrait du filtre, et une trappe d'accès au filtre (19) obturant l'ouverture d'accès, ladite cabine étant caractérisée en outre en ce qu'elle comprend une surface d'étanchéité pour le filtre (34) délimitant le passage de manière à coopérer avec le filtre (17) afin d'assurer que l'air qui passe dans le passage traverse le filtre, et des organes de coincement (20) du filtre, formés sur l'intérieur de la trappe d'accès (19) et coopérant avec des surfaces de coincement fixes (23) disposées à l'intérieur du passage pour l'air (14), de façon que lorsque la trappe d'accès est mise en place sur l'ouverture (18) les organes de coincement poussent le filtre contre la surface d'étanchéité.

2. Cabine (10) suivant la revendication 1, caractérisée en ce que le filtre (17) est fixé contre la surface d'étanchéité (34) de façon que la face extérieure (17a) du filtre que l'air traverse lors de son parcours vers le dispositif de chauffage et/ou de ventilation soit orientée vers le bas.

3. Cabine (10) suivant la revendication 2, caractérisée en ce que le passage pour l'air (15a) entre la face extérieure (17a) du filtre et la prise d'air (11) est conformé de façon que la poussière ou les débris, qui tombent de la face extérieure du filtre tendent à tomber hors de la prise d'air sous l'action de la pesanteur.

4. Cabine (10) suivant l'une quelconque des revendications 1 à 3, caractérisée en ce que la trappe d'accès au filtre (19) est maintenue en position fermée sur l'ouverture d'accès par un système de fixation du type à baïonnette (25) à quart de tour.

5. Cabine (10) suivant l'une quelconque des revendications 1 à 4, caractérisée en ce que l'ouverture d'accès au filtre (18) est située sur le toit de la cabine.

6. Cabine (10) suivant la revendication 5, caractérisée en ce qu'une trappe de secours (36) est ménagée dans le toit de la cabine près de la trappe d'accès au filtre (19) pour permettre à l'opérateur d'atteindre la trappe d'accès au filtre pour retirer le filtre (17) en se tenant debout dans la cabine avec la tête et les épaules dépassant de la trappe de secours ouverte.

FIG.1

FIG. 2

FIG.3

15  17  22

16

14

10

18

21  X  11,37

30

19

25

FIG.9

Z

Y  26

29

29

28

27

FIG.4

FIG.5

FIG.6

FIG.7

FIG.8